(19) Europäisches Patentamt

European Patent Office

Office européen des brevets

(11) **EP 0 812 754 B1**

(12) **EUROPÄISCHE PATENTSCHRIFT**

(45) Veröffentlichungstag und Bekanntmachung des Hinweises auf die Patenterteilung:
**08.03.2000 Patentblatt 2000/10**

(51) Int Cl.7: **B62D 5/06**

(21) Anmeldenummer: **97106700.4**

(22) Anmeldetag: **23.04.1997**

(54) **Hydraulische Servosteuerung, insbesondere hydraulische Servolenkung für Kraftfahrzeuge**

Hydraulic servomechanism, especially hydraulic power steering for motor vehicles

Servomécanisme hydraulique , en particulier direction assistée hydraulique pour véhicules à moteur

(84) Benannte Vertragsstaaten:
**DE ES FR GB IT**

(30) Priorität: **13.06.1996 DE 19623567**

(43) Veröffentlichungstag der Anmeldung:
**17.12.1997 Patentblatt 1997/51**

(73) Patentinhaber: **DaimlerChrysler AG**
**70567 Stuttgart (DE)**

(72) Erfinder:
• **Kress, Wolfgang**
**70327 Stuttgart (DE)**
• **Kooths, Uwe**
**71069 Sindelfingen (DE)**

(56) Entgegenhaltungen:
| | |
|---|---|
| EP-A- 0 091 590 | EP-A- 0 591 653 |
| EP-A- 0 731 013 | DE-A- 3 920 862 |
| DE-A- 4 335 390 | GB-A- 2 079 691 |

**Beschreibung**

Die Erfindung betrifft eine hydraulische Servosteuerung, insbesondere eine hydraulische Servolenkung für Kraftfahrzeuge, mit einem durch ein Servoventil mit offener Grundstellung bzw. offener Mitte steuerbar an eine Druckseite einer Hydraulikpumpe sowie an deren Saugseite bzw. an ein relativ druckloses Hydraulikreservoir anschließbaren hydraulischen Servomotor und mit einem die Hydraulikpumpe antreibenden Elektromotor, wobei der Elektromotor eine in Abhängigkeit von dessen elektrischer Strom- bzw. Leistungsaufnahme arbeitende Drehzahlregelung aufweist, die automatisch zwischen einer Betriebsweise mit nahezu konstanter geringer Drehzahl - Stand-by-Betrieb - und einer Betriebsweise mit nahezu konstanter hoher Drehzahl - Lastbetrieb - wechselt.

Derartige Servolenkungen sind bspw. aus der GB-A 2079691 bekannt und bieten den Vorteil, daß die Hydraulikpumpe mit bedarfsgerechter Drehzahl antreibbar ist, wobei die hohe Drehzahl dem maximal notwendigen Fördervolumen der Hydraulikpumpe angepaßt ist.

In der Regel besitzen jedoch hydraulische Servolenkungen von Kraftfahrzeugen eine über den Fahrzeugmotor antreibbare Hydraulikpumpe, welche je nach Fahrbedingungen mit sehr unterschiedlichen Drehzahlen läuft. Hierbei muß die Pumpe so bemessen sein, daß sie bereits bei Leerlaufdrehzahl des Motors einen hohen Förderstrom zu erzeugen vermag, wie er für Lenkbetätigungen bei Rangiermanövern notwendig ist. Dies ist gleichbedeutend damit, daß bei schneller Fahrt und entsprechend erhöhter Drehzahl des Fahrzeugmotors ein den Bedarf deutlich übersteigender Förderstrom erzeugt wird.

Im Ergebnis benötigen deshalb herkömmliche Servolenkungen relativ viel Energie, weil der Förderstrom der Pumpe ständig dem Maximalbedarf entspricht bzw. diesen sogar deutlich übersteigt.

Aufgabe der Erfindung ist es nun, den Energiebedarf der Servolenkung besonders gering zu halten.

Diese Aufgabe wird erfindungsgemäß bei einer hydraulischen Servosteuerung bzw. Servolenkung der eingangs angegebenen Art dadurch gelöst, daß

-   eine Umschaltung auf die hohe Drehzahl erfolgt, wenn die elektrische Strom- bzw. Leistungsaufnahme des Elektromotors bei der geringen Drehzahl einen unteren Schwellwert überschreitet, der etwas oberhalb eines bei der geringen Drehzahl zu erwartenden Minimalwertes der Strom bzw. Leistungsaufnahme des Elektromotors liegt, und
-   eine Absenkung auf die niedrige Drehzahl stattfindet, wenn die elektrische Strom- bzw. Leistungsaufnahme des Elektromotors bei der hohen Drehzahl für eine vorgebbare Zeitspanne nur geringfügig geschwankt hat und unterhalb eines oberen Schwellwertes geblieben ist, der dicht oberhalb eines bei der hohen Drehzahl zu erwartenden Minimalwertes der Strom- bzw. Leistungsaufnahme des Elektromotors liegt.

Die Erfindung beruht auf dem allgemeinen Gedanken, für eine lastabhängige Drehzahlregelung des Elektromotors der Hydraulikpumpe die Tatsache auszunutzen, daß die von der Hydraulikpumpe verursachte Belastung des Elektromotors jeweils signifikant abnimmt, wenn das Servoventil seine offene Grundstellung bzw. seine offene Mittelposition einnimmt. Denn in einem solchen Zustand führt von der Druckseite der Pumpe ein relativ ungedrosselter Weg zur Saugseite bzw. zum relativ drucklosen Hydraulikreservoir. Wenn dagegen das Servoventil seine Grundstellung bzw. die Position der offenen Mitte verläßt, steigt der Drosselwiderstand auf der Druckseite der Hydraulikpumpe deutlich an. Die Grundstellung bzw. die Position der offenen Mitte wird vom Servoventil nur dann eingenommen, wenn der Servomotor überhaupt keine Servokraft zu erzeugen braucht. Dementsprechend sind für eine gewisse Zeit anhaltende niedrige Belastungen des Elektromotors, wie sie auftreten, wenn sich das Servoventil in Grundstellung bzw. in offener Mittelstellung befindet, ein sicheres Anzeichen dafür, daß auf den Betriebszustand mit. niedriger Drehzahl, d.h. den Stand-by-Betrieb, übergegangen werden darf. Andererseits wird bei der Erfindung sicher gewährleistet, daß Betriebszustände, in denen eine Servokraft benötigt wird oder wünschenswert ist, in jedem Falle erkannt werden. Denn bereits bei einem geringfügigen Anstieg der Belastung des Servomotors wird der untere Schwellwert überschritten, mit der Folge, daß auf hohe Drehzahl übergegangen wird und die Pumpe mit einer entsprechend hohen Förderleistung arbeitet, die auch zur Erzeugung großer Servokräfte ausreicht.

Ein besonderer Vorzug der Erfindung liegt darin, daß eine Überschreitung des unteren Schwellwertes praktisch verzögerungsfrei festgestellt und damit sehr schnell auf hohe Drehzahl übergegangen werden kann. Dementsprechend ist eine erfindungsgemäß ausgebildete Servolenkung für Kraftfahrzeuge jeweils zur Erzeugung einer Servokraft bereit, bevor dies aus der Sicht des Fahrers notwendig ist. Die erfindungsgemäße Servolenkung bietet also ständig einen hohen Komfort.

Hier wirkt sich vorteilhaft aus, daß zur Erkennung einer Überschreitung des unteren Schwellwertes keinerlei zeitliche Mittelwerte der elektrischen Strom- bzw. Leistungsaufnahme des Elektromotors gebildet werden müssen.

Gemäß einer besonders bevorzugten Ausführungsform der Erfindung ist vorgesehen, daß die Drehzahl des Elektromotors beim Übergang auf die geringe Drehzahl mit zeitlicher Verzögerung geregelt bzw. gesteuert abgesenkt wird, und daß dabei sofort auf die hohe Drehzahl zurückgeschaltet wird, wenn die elektrische Strom- bzw. Leistungsaufnahme des Elektromotors einen während der Drehzahlabsenkung vorausgegangenen Wert um mehr als eine vorgegebene bzw. vorgebbare geringe Differenz überschreitet. Auf diese Weise kann ein unter Komfortgesichtspunkten langsamer Übergang von hoher auf geringe Drehzahl verwirklicht und gleichzeitig gewährleistet werden, daß eine gegebenenfalls notwendige Servokraft verzögerungsfrei zur Verfügung steht.

Eine Absenkung der Drehzahl des Elektromotors wird vorgenommen, wenn die elektrische Strom- bzw. Leistungsaufnahme des Elektromotors für eine vorgegebene bzw. vorgebbare Zeitspanne nur geringfügig geschwankt hat und dabei unterhalb einer oberen Schwelle geblieben ist, die etwas (z.B. 1A) oberhalb der Strom- bzw. Leistungsaufnahme des Elektromotors bei Grundstellung (offene Mitte) des Servoventils bei hoher Drehzahl liegt.

Besonders vorteilhaft ist bei dieser Erfindung, daß die obere und untere Schwelle ständig der aktuellen Strom- bzw. Leistungsaufnahme des Elektromotors bei hoher bzw. Stand-by-Drehzahl angepaßt werden kann. Damit wird berücksichtigt, daß die Strom- bzw. Leistungsaufnahme des Elektromotors von Temperaturänderungen des Hydraulikmediums und die damit einhergehende Viskositätsänderung und Durchlaufdruckänderung erheblich beeinflußt wird.

Um bei tiefen Umgebungstemperaturen nach einem Kaltstart sicherzustellen, daß sich das Hydraulikmedium möglichst schnell erwärmt und dementsprechend einen Zustand hoher Viskosität erreicht, bei dem die Hydraulikpumpe gegen einen vergleichsweise geringen Widerstand arbeiten muß, ist zweckmäßig vorgesehen, den Elektromotor so lange auf hoher Drehzahl laufen zu lassen, bis die elektrische Strom- bzw. Leistungsaufnahme des Elektromotors bei der hohen Drehzahl einen vorgegebenen Wert unterschreitet, der der Strom- bzw. Leistungsaufnahme des Elektromotors bei z.B. 0°C des Hydraulikmediums entspricht.

Weiterhin ist es zweckmäßig, die hohe Drehzahl des Elektromotors auf einen geregelten Maximalwert zu begrenzen, der bei einer mittleren zu erwartenden Spannung der Drehzahl des Elektromotors bei einer mittleren Last (z.B. 35A bei 70A Maximallast) entspricht, um die Leistungsaufnahme und die Geräuschabstrahlung im Bereich niedriger Lastanforderungen zu reduzieren. Ein weiterer Vorteil dieser Maximaldrehzahlbegrenzung liegt darin, daß das Servoventil des Lenkgetriebes im Bereich niedriger bis mittlerer Lenklasten mit einer spannungsunabhängigen, konstanten Ölmenge versorgt wird und sich demnach keine fördermengenabhängigen Drehmomentänderungen am Lenkrad ergeben.

Gegebenenfalls kann vorgesehen sein, die obere Drehzahl auf einen verminderten Wert zu setzen, wenn die elektrische Strom- bzw. Leistungsaufnahme des Elektromotors für eine vorgebbare bzw. vorgegebene Zeitdauer nahe eines bei maximal gedrosseltem bzw. bei geschlossenem Servoventil zu erwartenden Maximalwertes nur geringfügig schwankt. Diese Kriterien treten im Falle einer Fahrzeuglenkung nur dann ein, wenn die Lenkung bis zu einem Anschlag verstellt und am Anschlag gehalten wird. Denn nur in einem solchen Falle erreicht das Servoventil einer Servolenkung seine maximal gedrosselte bzw. geschlossene Position. Falls nun diese Position länger gehalten wird, kann eine unerwünscht starke Erwärmung des Hydraulikmediums eintreten, die durch die bevorzugt in solchen Fällen vorgesehene Verminderung der oberen Drehzahl weniger stark auftritt. Gleichzeitig kann damit die Hydraulikpumpe vor übermäßiger Beanspruchung geschützt werden.

Im übrigen wird hinsichtlich bevorzugter Merkmale der Erfindung auf die Ansprüche sowie die nachfolgende Erläuterung der Zeichnung verwiesen, anhand der besonders zweckmäßige Ausgestaltungen der Erfindung beschrieben werden.

Dabei zeigt

Fig. 1    eine schematisierte Gesamtdarstellung einer erfindungsgemäßen Servolenkung,

Fig. 2    ein Diagramm, welches die elektrische Stromaufnahme des Elektromotors bei verschiedenen gleichbleibenden Betriebsbedingungen wiedergibt,

Fig. 3    einen typischen zeitlichen Verlauf der elektrischen Stromaufnahme des Elektromotors bei sehr niedrigen Umgebungstemperaturen und entsprechend zähflüssigem Hydraulikmedium,

Fig. 4    ein entsprechendes Diagramm bei normalen Temperaturverhältnissen und normal flüssigem Hydraulikmedium und

Fig. 5    ein Diagramm, welches die Betriebsphasen einer Absenkung der Drehzahl des Motors vom hohen auf den niedrigen Wert beispielhaft darstellt.

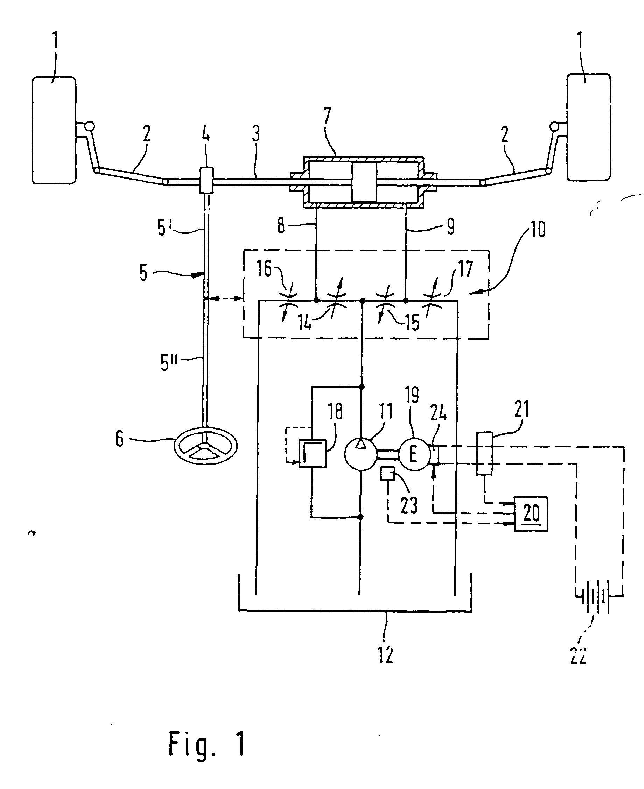

Gemäß Fig. 1 besitzt ein im übrigen nicht näher dargestelltes Kraftfahrzeug Fahrzeuglenkräder 1, die über Spurstangen 2 od.dgl. mit einer Zahnstange 3 mechanisch zwangsgekoppelt sind, welche ihrerseits über ein Ritzel 4 sowie eine Lenkwelle 5 mit einem Lenkhandrad 6 antriebsverbunden ist. Die Fahrzeuglenkräder 1 werden also in grundsätzlich bekannter Weise mittels des Lenkhandrades 6 gesteuert.

Die Zahnstange 3 bildet einen Teil einer Kolbenstange eines als doppeltwirkendes Kolben-Zylinder-Aggregat 7 ausgebildeten hydraulischen Servomotors, dessen Kolbenarbeitsräume mit Motoranschlüssen 8 und 9 eines herkömmlichen Servoventiles 10 verbunden sind, über das die beiden Seiten des Kolben-Zylinder-Aggregates 7 steuerbar mit der Druckseite einer Hydraulikpumpe 11 und/oder einem relativ drucklosen Hydraulikreservoir 12 verbindbar sind, mit dem auch die Saugseite der Pumpe 11 kommuniziert.

Das grundsätzlich herkömmliche Servoventil 10 umfaßt zwei vom Druckanschluß 13 der Hydraulikpumpe 11 zum Hydraulikreservoir 12 führende Drosselstrecken mit je einer Eingangsdrossel 14 bzw. 15 und je einer Ausgangsdrossel 16 bzw. 17. Diese Drosseln 14 bis 17 können in bekannter Weise als Steuerspalte zwischen schieberseitigen und gehäuseseitigen Steuerkanten des Servoventils 10 ausgebildet sein. Im übrigen werden die Drosseln 14 bis 17 jeweils simultan verstellt, wobei sich der Drosselwiderstand jeweils einer der Eingangsdrosseln 14 und 15 bei gleichzeitiger Verminderung des Drosselwiderstandes der jeweils anderen Eingangsdrossel erhöht und die Drosselwiderstände der Ausgangsdrosseln 16 und 17 ebenfalls zueinander gegenläufig und entgegengesetzt zu der jeweils zugeordneten Eingangsdrossel 14 oder 15 verändert werden. Dies wird durch die zueinander antiparallelen Pfeile an den Drosseln 14 bis 17 symbolisiert.

In einer Mittellage des Servoventiles 10 haben alle Drosseln 14 bis 17 etwa gleiche, geringe Drosselwiderstände, d.h. das von der Hydraulikpumpe 11 geförderte Hydraulikmedium kann auf zueinander symmetrischen Strömungswegen weitgehend ungedrosselt zum Reservoir 12 überströmen. Dabei liegen an den Motoranschlüssen 8 und 9, die jeweils zwischen einander zugeordneten Eingangs- und Ausgangsdrosseln 14 und 15 bzw. 16 und 17 angeschlossen sind, gleiche Druckverhältnisse vor. Dementsprechend wirkt auch auf beiden Seiten des Kolben-Zylinder-Aggregates 7 der gleiche (geringe) hydraulische Druck, mit der Folge, daß das Kolben-Zylinder-Aggregat 7 keine Stellkraft erzeugt. Dieser Zustand des Servoventils 10 wird auch als "offene Mitte" bezeichnet.

Sobald das Servoventil 10 seinen Zustand der offenen Mitte verläßt, wird der Drosselwiderstand einer Eingangsdrossel, z.B. 14, und der Ausgangsdrossel der jeweils anderen Drosselstrecke, hier z.B. 17, erhöht, während sich der Drosselwiderstand der beiden anderen Drosseln 15 und 16 noch weiter vermindert. Dementsprechend bilden sich unsymmetrische Strömungswege vom Druckanschluß 13 zum Hydraulikreservoir 12 mit der Folge, daß an den Motoranschlüssen 8 und 9 deutlich ungleiche hydraulische Drucke vorliegen, im dargestellten Beispiel ist der hydraulische Druck am Motoranschluß 9 deutlich höher als am Motoranschluß 8. Dementsprechend besteht zwischen den beiden Seiten des Kolben-Zylinder-Aggregates 7 eine entsprechende Druckdifferenz, die zu einer entsprechenden Stellkraft des Kolben-Zylinder-Aggregates 7 führt.

Falls das Servoventil 10 in eine Endlage gesteuert wird, schließen eine der Eingangsdrosseln 14 und 15, beispielsweise die Eingangsdrossel 14, und die der jeweils anderen Drosselstrecke zugeordente Ausgangsdrossel, im vorliegenden Beispiel die Ausgangsdrossel 17. Damit hat einerseits der Druckanschluß 13 der Hydraulikpumpe 11 uber das Servoventil 10 keinerlei Verbindung mehr zum Reservoir 12; darüber hinaus wirkt zwischen den Motoranschlüssen 8 und 9 und dementsprechend zwischen den beiden Seiten des Kolben-Zylinder-Aggregates 7 eine sehr hohe Druckdifferenz, die zu einer entsprechend großen Stellkraft des Kolben-Zylinder-Aggregates 7 führt; außerdem öffnet ein Druckbegrenzungsventil 18, über das nunmehr das von der Hydraulikpumpe 11 geförderte Hydraulikmedium zur Saugseite der Pumpe 11 zurückfließt.

Die Steuerung des Servoventiles 10 erfolgt in grundsätzlich bekannter Weise in Abhängigkeit von den zwischen dem Lenkhandrad 6 und den Fahrzeuglenkrädern 1 übertragenen Kräften bzw. Momenten. Dazu kann beispielsweise die Lenkwelle 5 zwei relativ zueinander begrenzt gegen Federkraft drehbare Wellenteile 5' und 5" aufweisen, deren Relativdrehungen dann auf das Servoventil 10 zu dessen Steuerung übertragen werden.

Erfindungsgemäß wird die Hydraulikpumpe 11 durch einen Elektromotor 19 angetrieben, welcher eine Drehzahlregelung 20 aufweist. Diese besitzt einen Eingang für einen ersten Sensor 21, dessen Signale die elektrische Strom- bzw. Leistungsaufnahme des Elektromotors 19 wiedergeben. Wenn der Elektromotor 19 zu seiner elektrischen Stromversorgung mit einer Batterie 22 oder einer sonstigen elektrischen Stromquelle verbunden ist, deren elektrische Spannung weitestgehend belastungsunabhängig konstant bleibt, genügt es, wenn der Sensor 21 als elektrischer Strommesser ausgebildet ist und lediglich die Stärke des dem Elektromotor zugeführten elektrischen Stromes erfaßt.

Selbst belastungsabhängige Spannungsabfälle an den Klemmen des Elektromotors infolge Verlust in den Versorgungskabeln erfordern für die erfindungsgemäßie Motorsteuerung lediglich die Sensierung der elektrischen Stromaufnahme, weil diese Spannungsabfälle erst auftreten können, nachdem infolge der Last auf die hohe Drehzahl geschaltet wurde.

Außerdem ist die Drehzahlregelung 20 eingangsseitig mit einem zweiten Sensor 23 verbunden, welcher die Drehzahl des Elektromotors 19 erfaßt und beispielsweise als Tachogenerator ausgebildet sein kann. Ausgangsseitig ist die Drehzahlregelung 20 mit einer Motorsteuerung 24 verbunden, derart, daß die Drehzahlregelung 20 in weiter unten dargestellter Weise den Elektromotor 19 auf unterschiedliche Drehzahlniveaus bringen bzw. auf denselben halten kann.

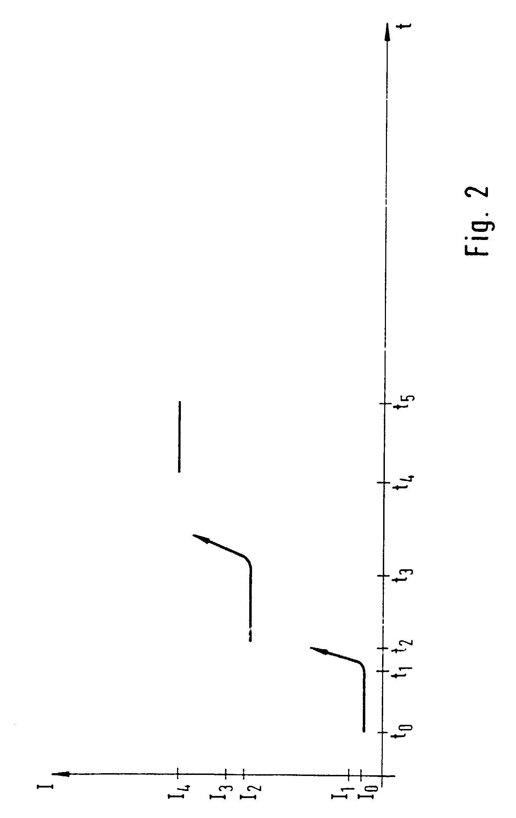

Es ergeben sich unter anderem die nachfolgend anhand der Fig. 2 erläuterten charakteristischen Betriebszustände. Dabei zeigt die Fig. 2 jeweils die elektrische Stromaufnahme I des Elektromotors 19 in Abhängigkeit von der Zeit t.

Zwischen den Zeitpunkten $t_0$ und $t_1$ möge der Elektromotor 19 mit einer niedrigen Drehzahl von beispielsweise 1.000 Umdrehungen pro Minute laufen; das Servoventil 10 möge im Zustand seiner offenen Mitte sein, und das Hydraulikmedium möge eine normale Betriebstemperatur haben. Dann wird die Stromaufnahme des Elektromotors 19 geringfügig um einen Wert $I_0$ schwanken, welcher sich in gewissen Grenzen in Abhängigkeit von der Temperatur des Hydraulikmediums, dessen Viskosität mit zunehmender Temperatur zunimmt, ändern kann. Wenn nun - im Beispiel der Fig. 2 nach dem Zeitpunkt $t_1$ bei unverändert niedriger Drehzahl des Elektromotors 19 das Servoventil 15 aus seiner offenen Mitte etwas verschoben wird, steigt der hydraulische Widerstand auf der Druckseite der Hydraulikpumpe 11 deutlich an, mit der Folge, daß aufgrund der von der Drehzahlregelung 20 konstant gehaltenen Drehzahl des Elektromotors 19 auch dessen Stromaufnahme deutlich ansteigen muß und in jedem Falle einen Wert $I_1$ übersteigt, der dicht oberhalb, etwa um 1A, oberhalb des Wertes $I_0$ liegt.

Zwischen einem Zeitpunkt $t_2$ und $t_3$ möge der Elektromotor 19 mit einer konstant hohen Drehzahl von beispielsweise 3.000 Umdrehungen pro Minute laufen; das Servoventil 10 möge wiederum den Zustand seiner offenen Mitte einnehmen; außerdem möge das Hydraulikmedium eine mittlere Temperatur aufweisen. In einem solchen Falle wird die Stromaufnahme des Elektromotors 19 geringfügig um einen Wert $I_2$ schwanken, welcher sich wiederum in Abhängigkeit von der Temperatur des Hydraulikmediums nach oben oder unten verschieben kann. Nach dem Zeitpunkt $t_3$ möge nun wiederum das Servoventil 10 aus dem Zustand seiner offenen Mitte verschoben werden. Dies hat zur Folge, daß die Stromaufnahme des Elektromotors 19 wiederum steil ansteigt und jedenfalls einen Wert $I_3$ übersteigen wird, der geringfügig, etwa um 1A, oberhalb des Wertes $I_2$ liegt.

Zwischen den Zeitpunkten $t_4$ und $t_5$ möge der Elektromotor 19 wiederum auf der vorgenannten hohen Drehzahl gehalten werden; außerdem möge das Servoventil 19 wiederum den Zustand seiner offenen Mitte einnehmen; jedoch möge das Hydraulikmedium eine außerordentlich niedrige Temperatur von beispielsweise -30°C haben. In diesem Falle wird die elektrische Stromaufnahme des Elektromotors 19 zunächst um einen sehr hohen Wert $I_4$ schwanken, der anfänglich recht deutlich oberhalb eines Wertes $I_5$ liegt, an den sich die Stromaufnahme des Elektromotors 19 bei steigender Temperatur des Hydraulikmediums zunehmend annähert und der dann bei noch weiter steigender Temperatur des Hydraulikmediums unterschritten werden kann, sobald die Temperatur des Hydraulikmediums auf mittlere Temperaturwerte angestiegen ist.

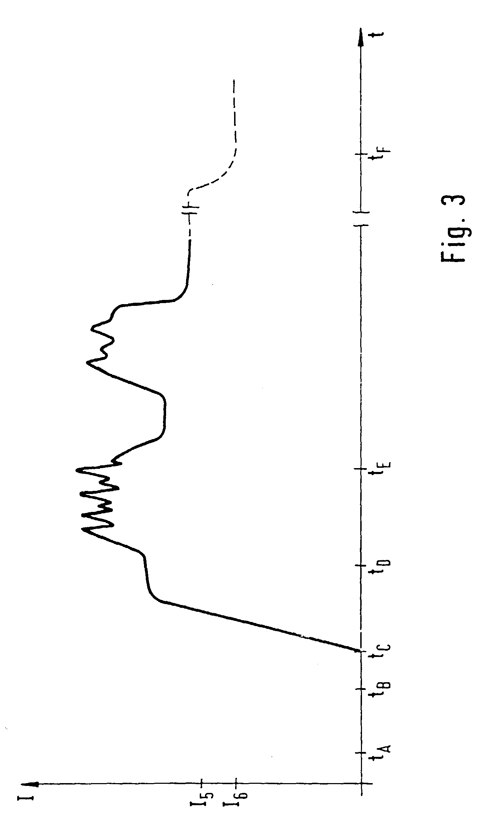

Anhand der Fig. 3 wird nun ein typischer Betriebsablauf nach einem Start des Fahrzeuges bei sehr tiefer Umgebungstemperatur und entsprechend kaltem Hydraulikmedium erläutert. Dargestellt ist wiederum die Stromaufnahme I des Elektromotors 19 in Abhängigkeit von der Zeit t.

Zu einem Zeitpunkt $t_A$ möge der Anlasser eines Fahrzeugmotors betätigt werden, welcher dann zu einem Zeitpunkt $t_B$ beginnt, selbsttätig zu laufen. Nach einer kurzen Verzögerungszeit, während der eine grundsätzlich herkömmliche Motorregelung den Leerlauf des Fahrzeugmotors stabilisiert hat, wird zu einem Zeitpunkt $t_C$ der Elektromotor 19 automatisch anlaufen, wobei die Drehzahlregelung 20 den Elektromotor 19 zunächst auf die hohe Drehzahl schaltet. Dementsprechend steigt die elektrische Stromaufnahme des Elektromotors 19 nach dem Zeitpunkt $t_C$ steil an und überschreitet aufgrund des sehr kalten Hydraulikmediums in jedem Falle den Wert $I_5$. Wenn nun zwischen den Zeitpunkten $t_D$ und $t_E$ Lenkmanöver erfolgen, die zu einer Verschiebung des Servoventiles 10 aus dem Zustand seiner hydraulischen Mitte führen, wird die Stromaufnahme I des Elektromotors 19 starke Schwankungen um sehr hohe Werte von I zeigen. Falls keine Lenkmanöver erfolgen und auf die Fahrzeuglenkräder 1 keinerlei Störkräfte wirken, kann das Servoventil 10 den Zustand seiner offenen Mitte einnehmen, mit der Folge, daß die Stromaufnahme des Elektromotors 19 nur noch geringfügig schwankt, jedoch aufgrund der zunächst noch sehr niedrigen Temperatur des Hydraulikmediums weiterhin einen hohen Wert oberhalb des Wertes $I_5$ aufweist.

Erst nach einer Aufwärmphase bei hoher Drehzahl wird der vorgegebene Stromwert $I_5$, der beispielsweise einer Stromaufnahme des Elektromotors bei 0°C des Hydraulikmediums entspricht, unterschritten. Dies wird durch einen entsprechenden Anfangswert des oberen Schwellwertes erreicht, der, wie oben beschrieben, von der elektrischen Strom- bzw. Leistungsaufnahme des Elektromotors bei hoher Drehzahl unterschritten werden muß, damit die Bedingung zum Absenken der Motordrehzahl erfüllt ist.

Bei jedem neuem Start des Fahrzeuges wird der obere Schwellwert auf diesen Anfangswert $I_5$ gesetzt. Dadurch ist sichergestellt, daß eine Drehzahlabsenkung nur bei angewärmtem Hydraulikmedium erfolgt und eindeutig definierte Zustände für die Drehzahlregelung des Elektromotors vorliegen.

Damit kann nach dem Zeitpunkt $t_F$ erstmals eine Phase auftreten, bei der die Stromaufnahme bei in Mittellage bleibendem Servoventil 10 geringfügig um einen Wert $I_6$ schwankt, der unterhalb der Schwelle $I_5$ liegt.

Falls hierbei der Schwellwert $I_5$ hinreichend weit unterschritten wird und über eine vorgegebene Zeitspanne eine geringfügige Schwankung der elektrischen Stromaufnahme vorliegt, senkt die Drehzahlregelung 20 die Drehzahl des Elektromotors 19 in weiter unten dargestellter Weise auf die geringe Drehzahl ab.

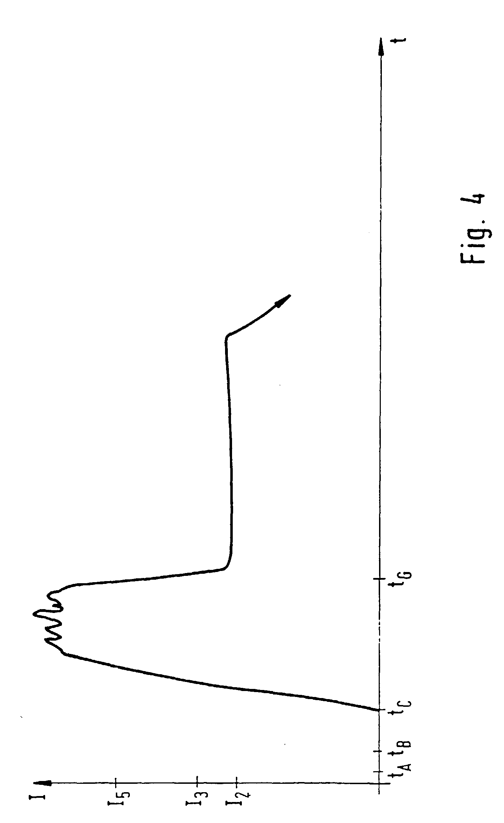

Die Fig. 4 zeigt nun die Verhältnisse bei mittlerer Temperatur des Hydraulikmedium. Wiederum wird der Anlasser des Fahrzeugmotors zu einem Zeitpunkt $t_A$ betätigt. Der Fahrzeugmotor beginnt zu einem Zeitpunkt $t_B$ selbsttätig zu laufen. Nach einer vorgegebenen Verzögerungszeit schaltet die Drehzahlregelung 20 den Elektromotor 19 zu einem Zeitpunkt $t_C$ ein und bringt diesen wiederum auf die hohe Drehzahl. Aufgrund der hohen Temperatur des Hydraulikmediums wird dabei der Wert $I_5$ nur dann überschritten, wenn das Servoventil 10 einen gegenüber seiner offenen Mitte verschobenen Zustand einnimmt, d.h. ein Lenkmanöver durchgeführt wird. Falls kein Lenkmanöver durchgeführt oder nach Abschluß des Lenkmanövers zu einem Zeitpunkt $t_G$ schwankt die Stromaufnahme I geringfügig um den Wert $I_2$, welcher unterhalb des als Schwellwert in der Drehzahlregelung 20 gespeicherten Wertes $I_3$ liegt. Falls sich derartige Verhältnisse für eine vorgegebene Zeitspanne einstellen, senkt die Drehzahlregelung 20 die Drehzahl des Elektromotors 19 in weiter unten dargestellter Weise ab auf die niedrige Drehzahl.

Nach einem Kaltstart bei tiefen Umgebungstemperaturen (Fig. 3) entspricht $I_3$ dem Wert $I_5$.

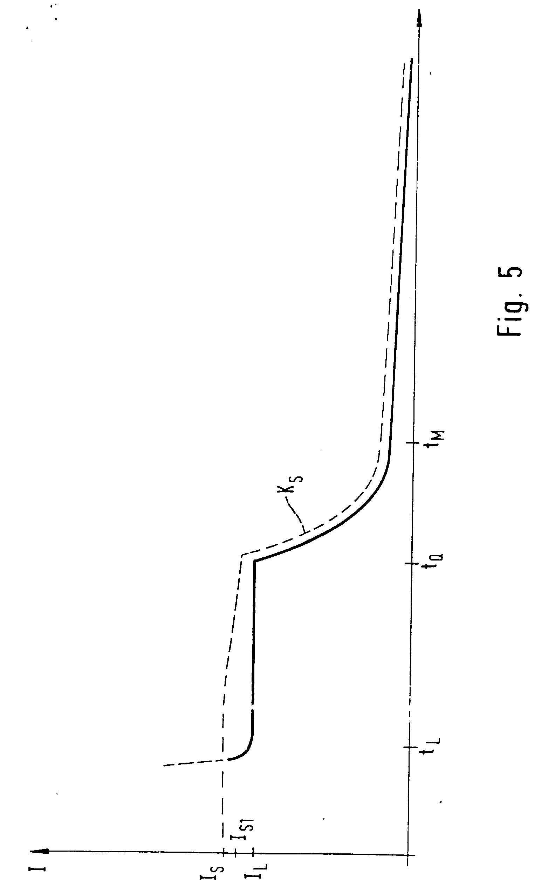

Anhand der Fig. 5 wird nun die Absenkung der Drehzahl des Elektromotors 19 von der hohen auf die niedrige Drehzahl und die Anpassung des oberen und unteren Schwellwertes an die aktuellen temperaturabhängigen Istwerte der elektrischen Stromaufnahme des Elektromotors erläutert.

Anhand der Fig. 5 wird nun die Absenkung der Drehzahl des Elektromotors 19 von der hohen Drehzahl auf die niedrige Drehzahl erläutert. Nach Ende eines Lenkmanövers, bei dem der Elektromotor 19 mit hoher Drehzahl läuft und eine stark schwankende, sehr hohe Stromaufnahme aufweist, möge nun beginnend mit einem Zeitpunkt $t_L$ eine Betriebsphase anfangen, in der das Servoventil 10 im Zustand seiner offenen Mitte bleibt, weil kein Lenkmanöver stattfindet. Dies hat zur Folge, daß die elektrische Stromaufnahme des Elektromotors 19, der vorläufig noch mit hoher Drehzahl läuft, nur noch geringfügig um einen relativ niedrigen Wert $I_L$ schwankt, der etwas unterhalb eines oberen Schwellwertes $I_S$ liegt, der in einer vorangehenden Betriebsphase bestimmt wurde und beispielsweise mit dem Wert $I_5$ oder $I_3$ identisch sein kann. Falls dieser Zustand hinreichend lange andauert, weil das Servoventil 10 im Zustand seiner offenen Mitte bleibt, senkt die Drehzahlregelung 20 die Drehzahl des Motors 19 ab. Aus dem Mittelwert $I_L$, um den die Stromaufnahme geschwankt hat, wird für den nachfolgenden Betrieb ein neuer, im Falle der Erwärmung des Hydraulikmediums seit der letzten Speicherung von $I_S$, entsprechend verminderter Schwellwert $I_{S1}$ ermittelt

$$(I_{S1} = I_L + I_{Abstand}, \text{ z.B. } I_{Abstand} = 1A)$$

und gespeichert.

Für den Fall der Abkühlung des Hydraulikmediums seit der letzten Speicherung von $I_S$ sind zwei Fälle zu unterscheiden:

| 1. | Geringe Abkühlung | Stromwert $I_L$ Unterschreitet $I_S$, liegt aber höher als zum Zeitpunkt der Ermittlung von $I_S$ ($I_S$-$I_{Abstand}$ < $I_L$ < $I_S$) . Es wird ein entsprechend erhöhter Schwellwert $I_{S1}$ ermittelt und gespeichert. |
|---|---|---|
| 2. | Deutliche Abkühlung | Stromwert $I_L$ übersteigt $I_S$ ($I_L$ > $I_S$). Dieser Zustand wird weiter unten beschrieben. |

Die Drehzahlabsenkung erfolgt zu einem Zeitpunkt $t_Q$ zunächst mit relativ großer und dann mit zunehmend geringer werdender Änderungsgeschwindigkeit. Dementsprechend nimmt die Stromaufnahme des Elektromotors 19 zunächst relativ schnell und nachfolgend langsamer ab. Analog zur Absenkung der tatsächlichen Stromaufnahme des Elektromotors wird ständig gemäß der Kurve $K_S$ ein Schwellwert bestimmt, der um ein geringes Maß von etwa 1A oberhalb der tatsächlichen Stromaufnahme liegt.

Sollte während dieser Phase nun ein Lenkmanöver erfolgen, bei dem das Servoventil 10 aus dem Zustand seiner offenen Mitte ausgelenkt wird, hat dies zwangsläufig zur Folge, daß die Stromaufnahme des Elektromotors praktisch schlagartig den jeweils aktuellen Wert der Kurve $K_S$ überschreitet. Dann schaltet die Drehzahlregelung 20 den Elektromotor 19 sofort wieder auf die hohe Drehzahl und der vorangehend beschriebene Ablauf wiederholt sich.

Falls kein Lenkmanöver erfolgt und dementsprechend das Servoventil 10 ständig im Zustand seiner offenen Mitte bleibt, wird etwa zum Zeitpunkt $t_M$ die geringe Drehzahl erreicht. Falls sich nun der Zustand des Servoventiles 10 nicht ändert, schwankt die tatsächliche Stromaufnahme des Elektromotors 19 geringfügig um einer sehr geringen Wert, welcher sich gegebenenfalls temperaturabhängig langsam ändern kann. Dabei folgt die Kurve $K_S$ der tatsächlichen Stromaufnahme in Abwärtsrichtung (wenn die Temperatur des Hydraulikmediums steigt) ohne nennenswerte Verzögerung. In Aufwärtsrichtung (wenn die Temperatur des Hydraulikmediums absinkt) kann die Kurve $K_S$ nur langfristig folgen.

Damit ist sicher gewährleistet, daß der jeweils aktuelle Wert der Kurve $K_S$ von der tatsächlichen Stromaufnahme des Motors 19 sofort überschritten wird, wenn aufgrund eines Lenkmanövers das Servoventil 10 den Zustand seiner offenen Mitte verläßt.

Bei einem nachfolgenden Lenkmanöver wird die Drehzahlregelung 20 den Elektromotor 19 erst dann wieder in Richtung der niedrigen Drehzahl steuern, wenn der zuletzt gespeicherte Schwellwert $I_{S1}$ hinreichend lange unterschritten wird.

Sollte dies für vergleichsweise lange Zeitspannen, in denen die aktuelle Stromaufnahme des Elektromotor 19 nur geringfügig schwankt, nicht erfolgen, was bei Abkühlung des Hydraulikmediums infolge langer Geradeausfahrt bei niedriger Drehzahl eintreten kann, so wird die Drehzahlregelung 20 den zuletzt ermittelten Schwellwert $I_S$ langsam anheben, um längerfristig eine Absenkung der Drehzahl auf den geringen Wert zu ermöglichen. Durch die lediglich langsam erfolgende Anhebung des letztgenannten Schwellwertes $I_S$ wird gewährleistet, daß eine sogenannte stationäre Kreisfahrt des Kraftfahrzeuges zu keiner nachhaltigen Veränderung von Schwellwerten führen kann. Eine derartige stationäre Kreisfahrt ist gekennzeichnet durch ein weitestgehend konstant bleibenden Lenkwinkel der Fahrzeuglenkräder 1 und nahezu konstant bleibende Lenkkräfte, mit der Folge, daß das Servoventil 10 für längere Zeit unverändert eine geringfügig gegenüber dem Zustand der offenen Mitte verschobene Lage einnehmen kann. Dementsprechend kann die aktuelle Stromaufnahme des Elektromotors 19 auch nur geschwanken, allerdings auf einem erhöhten Niveau. Durch die lediglich langsame Anhebung des vorgenannten Schwellwertes $I_S$ kann sich derselbe auch bei zeitlich längerer stationärer Kreisfahrt nur vergleichsweise wenig verändern. Im wesentlichen bleibt er nahe eines Niveaus, welches sich bei hoher Drehzahl des Elektromotors 19 und gleichzeitig im Zustand der offenen Mitte Servoventil 10 einstellt.

Sollte die Fahrzeuglenkung längere Zeit an einem Endanschlag gehalten werden, bleibt das Servoventil 10 entsprechend lange in einem Schließzustand, bei dem der Druckanschluß 13 über das Servoventil 10 nicht mit dem Hydraulikreservoir 12 zu kommunizieren vermag. Das von der Hydraulikpumpe 11 geförderte Hydraulikmedium strömt über das Druckbegrenzungsventil 18 ständig unmittelbar zur Saugseite der Pumpe 11 und erwärmt sich relativ schnell. Dieser Zustand ist hinsichtlich der Stromaufnahme I des Elektromotors 19 dadurch gekennzeichnet, daß die Stromaufnahme ständig auf extrem hohen Werten bleibt Falls dies für eine gewisse Zeitspanne der Fall bleibt, senkt die Drehzahlregelung 20 die hohe Drehzahl zunächst auf einen verminderten Wert ab. Dies hat übrigens hinsichtlich der Stromaufnahme des Elektromotors 19 nur relativ geringe Auswirkungen, weil die Pumpe 11 nach wie vor gegen einen hohen hydraulischen Widerstand arbeiten muß. Gleichwohl wird eine mögliche weitere Erwärmung des Hydraulikmediums zumindest verlangsamt.

Wenn nun nachfolgend bei Beendigung des Lenkmanövers das Servoventil 10 wiederum für eine gewisse Zeitspanne den Zustand seiner offenen Mitte einnimmt, fällt die aktuelle Stromaufnahme I des Elektromotors 19 wieder unter den letzten oberen Schwellwert $I_{S1}$, mit der Folge, daß die Drehzahlregelung 20 die Drehzahl auf den niedrigen Wert abzusenken vermag. Wenn während der Drehzahlabsenkung ein Lenkmanöver erfolgt, so hat dies wiederum zur Folge, daß die aktuelle Stromaufnahme I des Elektromotors 19 wiederum stark ansteigt und dementsprechend die jeweils aktuellen Werte der Kurve $K_S$ überschreitet, weil eine Aufwärtskorrektur des jeweils letzten Wertes der Kurve $K_S$ nur langsam, d.h. in größeren zeitlichen Abständen zugelassen wird. Diese Überschreitung führt dazu, daß die Drehzahlregelung 20 den Elektromotor 19 wieder schnell auf die hohe Drehzahl (z.B. 3.000 Umdrehungen pro Minute) steuert.

Grundsätzlich kann die Drehzahlregelung 20 auch dafür ausgelegt sein, Signale weiterer Sensoren, die im Fahrzeug für andere Zwecke ohnehin vorhanden sind, auszuwerten. Derartige Signale werden zwar für die lastabhängige Drehzahlregelung des Elektromotors 19 nicht unmittelbar benötigt. Sie können jedoch zu einer Plausibilitätsprüfung des jeweils eingeschal teten Zustandes herangezogen werden, so daß sich die Drehzahlregelung 20 ständig selbst auf richtige Funktion zu überprüfen vermag.

**Patentansprüche**

1.  Hydraulische Servosteuerung, insbesondere hydraulische Servolenkung für Kraftfahrzeuge, mit einem durch ein Servoventil (10) mit offener Grundstellung beziehungsweise offener Mitte steuerbar an eine Druckseite einer Hydraulikpumpe (11) sowie an deren Saugseite oder ein relativ druckloses Hydraulikreservoir (12) anschließbaren hydraulischen Servomotor (7) und einem die Hydraulikpumpe (11) antreibenden Elektromotor (19), wobei der Elektromotor (19) eine in Abhängigkeit von dessen elektrischer Strom- beziehungsweise Leistungsaufnahme (I) arbeitende Drehzahlregelung (20) aufweist, die automatisch zwischen einer Betriebsweise mit nahezu konstanter geringer Drehzahl und einer Betriebsweise mit nahezu konstanter hoher Drehzahl wechselt,
    **dadurch gekennzeichnet,**
    daß

    -   eine Umschaltung auf die hohe Drehzahl erfolqt, wenn die elektrische Strom- beziehungsweise Leistungsaufnahme des Elektromotors (19) bei der geringen Drehzahl einen unteren Schwellwert überschreitet, der etwas oberhalb eines bei der geringen Drehzahl zu erwartenden ersten Minimalwertes der Strom- beziehungsweise Leistungsaufnahme des Elektromotors (19) liegt, und
    -   eine Absenkung auf die niedrige Drehzahl stattfindet, wenn die elektrische Strom- beziehungsweise Leistungsaufnahme (I) des Elektromotors (19) bei der hohen Drehzahl für eine vorgebbare Zeitspanne nur allenfalls geringfügig geschwankt hat und unterhalb eines oberen Schwellwertes geblieben ist, der dicht oberhalb eines bei der hohen Drehzahl zu erwartenden zweiten Minimalwertes der Strom- beziehungsweise Leistungsaufnahme (I) des Elektromotors liegt.

2.  Servosteuerung nach Anspruch 1,

**dadurch gekennzeichnet,**
daß die Drehzahl des Elektromotors (19) beim Übergang auf die geringe Drehzahl mit zeitlicher Verzögerung geregelt beziehungsweise gesteuert abgesenkt wird, und daß dabei sofort auf die hohe Drehzahl zurückgeschaltet wird, wenn die Strom- beziehungsweise Leistungsaufnahme des Elektromotors (19) einen während der Drehzahlabsenkung vorausgegangenen Wert der Strom- beziehungsweise Leistungsaufnahme um mehr als eine vorgegebene beziehungsweise vorgebbare geringe Differenz überschreitet.

3.  Servosteuerung nach Anspruch 1 oder 2,
    **dadurch gekennzeichnet,**
    daß der Elektromotor (19) beim Umschalten auf die hohe Drehzahl stark beschleunigt wird.

4.  Servosteuerung nach einem der Ansprüche 1 bis 3,
    **dadurch gekennzeichnet,**
    daß der Elektromotor (19) zumindest bei niedriger Umgebungstemperatur mit vorgegebener beziehungsweise vorgebbarer Verzögerungszeit nach dem Start eines zum Antrieb des Kraftfahrzeuges dienenden Motors anläuft.

5.  Servosteuerung nach einem der Ansprüche 1 bis 4,
    **dadurch gekennzeichnet,**
    daß der Elektromotor (19) so lange auf hoher Drehzahl bleibt, bis die elektrische Strom- beziehungsweise Leistungsaufnahme (I) des Elektromotors (19) bei der hohen Drehzahl erstmals einen vorgegebenen beziehungsweise vorgebbaren Schwellwert unterschreitet, der der zu erwartenden elektrischen Strom- beziehungsweise Leistungsaufnahme des Elektromotors bei einer Temperatur von zum Beispiel 0°C des Hydraulikmediums bei hoher Drehzahl entspricht.

6.  Servosteuerung nach einem der Ansprüche 1 bis 5,
    **dadurch gekennzeichnet,**
    daß der untere Schwellwert - beginnend mit einem Anfangswert - in Adaption an wechselnde Betriebsbedingungen automatisch verändert wird, wobei jeweils nach einem vorgebbaren beziehungsweise vorgegebenen Zeitintervall, innerhalb dessen die elektrische Strom- beziehungsweise Leistungsaufnahme des Elektromotors (19) bei der geringen Drehzahl nur geringfügig geschwankt hat, ein neuer unterer Schwellwert gesetzt wird, welcher geringfügig oberhalb eines Wertes der elektrischen Strom- beziehungsweise Leistungsaufnahme während des genannten Zeitintervalles liegt.

7.  Servosteuerung nach einem der Ansprüche 1 bis 6,
    **dadurch gekennzeichnet,**
    daß bei fallender Tendenz der elektrischen Strom- beziehungsweise Leistungsaufnahme (I) des Elektromotors (19) bei der geringen Drehzahl eine entsprechend schnelle Absenkung des unteren Schwellwertes erfolgt, wenn die elektrische Strom- beziehungsweise Leistungsaufnahme nur geringfügig schwankt.

8.  Servosteuerung nach einem der Ansprüche 1 bis 7,
    **dadurch gekennzeichnet,**
    daß bei steigender Tendenz der elektrischen Strom- beziehungsweise Leistungsaufnahme (I) des Elektromotors (19) bei der geringen Drehzahl nur eine langsame Anhebung des unteren Schwellwertes erfolgt, um auch relativ langsame Lenkbewegungen durch Überschreiten dieser Schwelle erkennen zu können.

9.  Servosteuerung nach einem der Ansprüche 1 bis 8,
    **dadurch gekennzeichnet,**
    daß der obere Schwellwert - beginnend mit einem Anfangswert - in Adaption an wechselnde Betriebsbedingungen automatisch verändert wird, wobei zunächst ein oberer Anfangsschwellwert gesetzt wird, welcher dicht oberhalb einer bei geringer Temperatur zum Beispiel 0°C des Hydraulikmediums bei der hohen Drehzahl zu erwartenden minimalen Strom- beziehungsweise Leistungsaufnahme (I) des Elektromotors (19) liegt.

10. Servosteuerung nach einem der Ansprüch 1 bis 9,
    **dadurch gekennzeichnet,**
    daß vor jedem Absenken der Drehzahl des Elektromotors auf die niedrige Drehzahl ein neuer oberer Schwellwert gesetzt wird, welcher dicht oberhalb eines Wertes der Strom- beziehungsweise Leistungsaufnahme (I) des Elektromotors während der vorangegangenen Betriebsphase liegt, bei der über eine vorgegebene Zeitspanne eine nur geringfügige Schwankung der elektrischen Strom- beziehungsweise Leistungsaufnahme des Elektromotors vorgelegen hat.

**11.** Servosteuerung nach einem der Ansprüche 1 bis 10,
**dadurch gekennzeichnet,**
daß die hohe Drehzahl des Elektromotors auf einen geregelten Maximalwert begrenzt wird, der bei einer mittleren zu erwartenden Spannung der Drehzahl des Elektromotors einer mittleren Last zum Beispiel 35A bei 70A Maximallast entspricht.

**12.** Servosteuerung nach einem der Ansprüche 1 bis 11,
**dadurch gekennzeichnet,**
daß für die obere Drehzahl ein verminderter Wert gesetzt wird, wenn die elektrische Strom- beziehungsweise Leistungsaufnahme (I) des Elektromotors (19) für eine vorgebbare beziehungsweise vorgegebene Zeitdauer nahe eines bei maximal gedrosseltem beziehungsweise geschlossenem Servoventil (10) zu erwartenden Maximalwertes gelegen hat.

**13.** Servosteuerung nach Anspruch 12,
**dadurch gekennzeichnet,**
daß die obere Drehzahl bei einer folgenden Absenkung der elektrischen Strom- beziehungsweise Leistungsaufnahme infolge einer weniger gedrosselten Stellung des Servoventils wieder auf den ursprünglichen hohen Wert gesetzt wird.

**14.** Servosteuerung nach einem der Ansprüche 1 bis 13,
**dadurch gekennzeichnet.**
daß die Drehzahlregelung (20) Eingänge zur Auswertung zusätzlicher auch für andere Zwecke auszuwertender Betriebsparameter eines Kraftfahrzeuges aufweist.


## Claims

**1.** Hydraulic servo-control system, in particular a hydraulic servo-steering system for motor vehicles, comprising a hydraulic servo-motor (7) which can be connected in a controllable way via a servo-valve (10) whose normal or median position is open, to the pressure side of a hydraulic pump (11) and to its suction side or a relatively unpressurised hydraulic reservoir (12), and an electric motor (19) which drives the hydraulic pump (11), such that the electric motor (19) comprises a revolution speed regulator (20) which operates as a function of the motors electric current or power uptake (I), changing automatically between a mode of operation in which the revolution speed is almost constant and low and a mode of operation in which the revolution speed is almost constant and high, **characterised in that**

- a change up to the high revolution speed takes place when, at the low revolution speed, the electric current or power uptake of the electric motor (19) rises above a lower threshold value which is somewhat higher than a first minimum value of the current or power uptake of the electric motor (19) to be expected at the low revolution speed, and
- a reduction down to the low revolution speed takes place when, at the high revolution speed, the electric current or power uptake (I) of the electric motor (19) has fluctuated only slightly, and remained for a time that can be determined in advance below an upper threshold value which is just above a second minimum value of the current or power uptake (I) of the electric motor to be expected at the high revolution speed.

**2.** Servo-control system according to Claim 1,
**characterised in that**
on transition to the low revolution speed, the revolution speed of the electric motor (19) is reduced in a regulated or controlled way with some time delay, but changes back up to the high revolution speed immediately if the current or power uptake of the electric motor (19) differs by more than a predetermined or specifiable small amount from a previous value of the current or power uptake during the reduction of the revolution speed.

**3.** Servo-control system according to Claims 1 or 2,
**characterised in that**
on switching to the high revolution speed, the electric motor (19) accelerates rapidly.

4. Servo-control system according to any of Claims 1 to 3,
**characterised in that**
at least at a low ambient temperature, the electric motor (19) starts up after a predetermined or specifiable delay time following the starting of an engine that serves to drive the motor vehicle.

5. Servo-control system according to any of Claims 1 to 4,
**characterised in that**
the electric motor (19) remains at the high revolution speed until the electric current or power uptake (I) of the electric motor (19) at the high revolution speed first falls below a predetermined or specifiable threshold value corresponding to the electric current or power uptake of the electric motor to be expected at the high revolution speed when the temperature of the hydraulic medium is, for example, 0° C.

6. Servo-control system according to any of Claims 1 to 5,
**characterised in that**
starting from an initial value, the lower threshold value is varied automatically to adapt to changing operating conditions, such that in each case after a predeterminable or predetermined time interval within which the electric current or power uptake of the electric motor (19) has fluctuated only slightly at the low revolution speed, a new lower threshold value is set, which is slightly above a value of the electric current or power uptake during the said time interval.

7. Servo-control system according to any of Claims 1 to 6,
**characterised in that**
when the electric current or power uptake (I) of the electric motor (19) at the low revolution speed is on a downward trend, the lower threshold value is reduced correspondingly rapidly if the electric current or power uptake is varying only slightly.

8. Servo-control system according to any of Claims 1 to 7,
**characterised in that**
when the electric current or power uptake (I) of the electric motor (19) at the low revolution speed is on an upward trend, the lower threshold value is increased only slowly, so that relatively slow steering movements will also be recognised when the said threshold is exceeded.

9. Servo-control system according to any of Claims 1 to 8,
**characterised in that**
starting from an initial value, the upper threshold value is varied automatically to adapt to changing operating conditions, such that to begin with an upper initial threshold value is set, which is just above a value of the minimum current or power uptake (I) of the electric motor (19) to be expected at the high revolution speed when the hydraulic medium is at a low temperature, for example 0° C.

10. Servo-control system according to any of Claims 1 to 9,
**characterised in that**
before any reduction of the revolution speed of the electric motor to the lower revolution speed, a new upper threshold value is set, which is just above a value of the current or power uptake (I) of the electric motor during the previous phase of operation, at which the electric current or power uptake of the electric motor has fluctuated only slightly over a predetermined time interval.

11. Servo-control system according to any of Claims 1 to 10,
**characterised in that**
the high revolution speed of the electric motor is limited to a regulated maximum value which, at an average expected voltage, corresponds to the revolution speed of the electric motor at medium load, for example 35A for a maximum load of 70A.

12. Servo-control system according to any of Claims 1 to 11,
**characterised in that**
a reduced value is set for the upper revolution speed when the electric current or power uptake (I) of the electric motor (19) has been close to a maximum value expected when the servo-valve (10) is maximally throttled or closed, for a predeterminable or predetermined time.

**13.** Servo-control system according to Claim 12,
**characterised in that**
on subsequent reduction of the electric current or power uptake as the result of a less throttled position of the servo-valve, the upper revolution speed is restored to the original high value.

**14.** Servo-control system according to any of Claims 1 to 13,
**characterised in that**
the revolution speed regulation system (20) comprises inputs for the evaluation of additional motor vehicle operation parameters, which are to be evaluated for other purposes as well.

**Revendications**

**1.** Servomécanisme hydraulique, en particulier direction assistée hydraulique pour véhicules à moteur, comportant un servomoteur hydraulique (7) qui, par l'intermédiaire d'un servorobinet (10) à position de base ouverte ou à milieu ouvert, peut être relié en commande à un côté sous pression d'une pompe hydraulique (11) ainsi qu'à son côté d'aspiration ou à un réservoir hydraulique (12) relativement sans pression, ainsi qu'un moteur électrique (19) qui entraîne la pompe hydraulique (11), dans lequel le moteur électrique (19) présente une régulation de la vitesse de rotation (20) qui travaille en fonction de l'intensité ou de la puissance électrique appelée (I) et qui commute automatiquement entre un mode d'exploitation à basse vitesse de rotation presque constante et un mode d'exploitation à haute vitesse de rotation presque constante,
**caractérisé par le fait que**

■ il y a commutation sur la haute vitesse de rotation lorsque, à base vitesse de rotation, l'intensité ou la puissance électrique appelée par le moteur électrique (19) dépasse, une valeur de seuil inférieur qui se situe un peu au-dessus d'une première valeur minimale, à attendre en basse vitesse de rotation, de l'intensité ou de la puissance appelée par le moteur électrique (19), et

■ il y a décroissance vers la basse vitesse de rotation lorsque, à haute vitesse de rotation, l'intensité ou la puissance électrique appelée (I) par le moteur électrique (19) n'a à la rigueur que légèrement oscillé pendant une durée à prescrire et est restée en dessous d'une valeur de seuil supérieur qui se situe juste au-dessus d'une deuxième valeur minimale, à attendre à haute vitesse de rotation, de l'intensité ou de la puissance électrique appelée (I) par le moteur électrique.

**2.** Servomécanisme selon la revendication 1, caractérisé par le fait que lors du passage en basse vitesse de rotation, la vitesse de rotation du moteur électrique (19) décroît avec régulation ou commande de la décélération dans le temps et qu'elle y repasse aussitôt en haute vitesse de rotation si l'intensité ou la puissance appelée par le moteur électrique (19) dépasse, par valeur supérieure, de plus d'une faible différence, prescrite ou à prescrire, une valeur de l'intensité ou de la puissance appelée qui avait précédé pendant la décroissance de la vitesse de rotation.

**3.** Servomécanisme selon la revendication 1 ou 2, caractérisé par le fait que lors de la commutation sur la haute vitesse de rotation, le moteur électrique (19) est fortement accéléré.

**4.** Servomécanisme selon l'une des revendications 1 à 3, caractérisé par le fait que tout au moins à faible température ambiante, le moteur électrique (19) démarre avec un temps de retard, prescrit ou à prescrire, après le démarrage d'un moteur servant à l'entraînement du véhicule à moteur.

**5.** Servomécanisme selon l'une des revendications 1 à 4, caractérisé par le fait que le moteur électrique (19) reste à haute vitesse de rotation jusqu'à ce que, à haute vitesse de rotation, l'intensité ou la puissance électrique appelée (I) par le moteur électrique (19) dépasse pour la première fois, par valeur inférieure, une valeur de seuil, prescrite ou à prescrire, qui correspond à l'intensité ou à la puissance électrique appelée par le moteur électrique à laquelle on doit s'attendre à une température de par exemple 0°C du fluide hydraulique à haute vitesse de rotation.

**6.** Servomécanisme selon l'une des revendications 1 à 5, caractérisé par le fait que la valeur de seuil inférieur - en commençant à une valeur initiale - se modifie automatiquement en s'adaptant à des conditions d'exploitation changeantes, étant précisé qu'après chaque intervalle de temps, à prescrire ou prescrit, pendant lequel l'intensité ou la puissance électrique appelée par le moteur électrique (19) n'a que légèrement oscillé à faible vitesse de rotation, est définie une nouvelle valeur de seuil inférieur qui se situe légèrement au-dessus d'une valeur de l'intensité ou de la puissance électrique appelée pendant l'intervalle de temps mentionné.

7. Servomécanisme selon l'une des revendications 1 à 6, caractérisé par le fait que si l'intensité ou la puissance électrique appelée (I) par le moteur électrique (19) a tendance à décroître à faible vitesse de rotation, il y a décroissance rapide appropriée de la valeur de seuil inférieur si l'intensité ou la puissance électrique appelée n'oscille que faiblement.

8. Servomécanisme selon l'une des revendications 1 à 7, caractérisé par le fait que si l'intensité ou la puissance électrique appelée (I) par le moteur électrique (19) a tendance à croître à faible vitesse de rotation, il n'y a qu'une lente croissance de la valeur de seuil inférieur pour pouvoir reconnaître des mouvements de braquage, même relativement lents, par dépassement, par valeur supérieure, de ce seuil.

9. Servomécanisme selon l'une des revendications 1 à 8, caractérisé par le fait que la valeur de seuil supérieur - en commençant à une valeur initiale - se modifie automatiquement en s'adaptant à des conditions d'exploitation changeantes, étant précisé que tout d'abord est définie une valeur de seuil supérieur initiale qui se situe juste au-dessus d'une intensité ou d'une puissance minimale prélevée (I) par le moteur électrique (9) à attendre à haute vitesse de rotation à basse température de par exemple à 0°C du fluide hydraulique.

10. Servomécanisme selon l'une des revendications 1 à 9, caractérisé par le fait qu'avant chaque décroissance de la vitesse de rotation électrique pour passer à la basse vitesse de rotation, est définie une nouvelle valeur de seuil supérieur qui se situe juste au-dessus d'une valeur de l'intensité ou de la puissance prélevée (I) par le moteur électrique pendant la phase et l'exploitation qui avait précédé et au cours de laquelle il n'y a eu, pendant une durée prescrite, qu'une faible oscillation de l'intensité ou de la puissance électrique prélevée par le moteur électrique.

11. Servomécanisme selon l'une des revendications 1 à 10, caractérisé par le fait que la haute vitesse de rotation du moteur électrique est limitée à une valeur maximale régulée qui, pour une tension moyenne à attendre, correspond à la vitesse de rotation du moteur électrique à charge moyenne par exemple 35A pour une charge maximale de 70A.

12. Servomécanisme selon l'une des revendications 1 à 11, caractérisé par le fait qu'une valeur réduite est définie pour la vitesse supérieure si, pendant une durée à prescrire ou prescrite, l'intensité de la puissance électrique appelée (I) par le moteur électrique (19) est passée près d'une valeur maximale à attendre pour un servorobinet (10) étranglé au maximum ou fermé.

13. Servomécanisme selon a revendication 12, caractérisé par le fait que dans le cas d'une décroissance de l'intensité ou de la puissance électrique appelée à la suite d'une position moins étranglée du servorobinet, la vitesse de rotation supérieure est à nouveau définie à la valeur élevée d'origine.

14. Servomécanisme selon l'une des revendications 1 à 13, caractérisé par le fait que le circuit de régulation (20) de la vitesse de rotation présente des entrées pour traiter en supplément des paramètres d'exploitation d'un véhicule à moteur à traiter dans d'autres buts.

Fig. 1

Fig. 2

Fig. 3

Fig. 4

EP 0 812 754 B1

Fig. 5